# FASCICULE DE BREVET EUROPEEN

(11) **EP 3 657 951 B1**
(45) Date de publication et mention de la délivrance du brevet: **07.06.2023**
(21) Numéro de dépôt: 18758924.7
(22) Date de dépôt: 20.07.2018
(51) Int. Cl.: A21C 1/02, A21C 1/14, B01F 27/1126, B01F 27/1142, B01F 27/805

(54) **ORGANE DE PÉTRISSAGE D'UNE PÂTE ET DISPOSITIF DE PÉTRISSAGE COMPRENANT UN TEL ORGANE**
ELEMENT ZUM KNETEN VON TEIG UND KNETVORRICHTUNG MIT EINEM SOLCHEN ELEMENT
MEMBER FOR KNEADING DOUGH AND KNEADING DEVICE COMPRISING SUCH A MEMBER

(30) Priorité: 26.07.2017 FR 1757099
(43) Date de publication de la demande: 03.06.2020
(73) Titulaire: VMI, 85600 Montaigu Vendée (FR)
(72) Inventeur: CHEIO DE OLIVEIRA, José, 85600 St Hilaire de Loulay (FR); CHAILLOU, Emmanuel, 85800 Le Fenouiller (FR); MILLE, Jessica, 85600 Bouffere (FR); PAUGAM, Nicolas, 85200 Fontenay Le Comte (FR)
(74) Mandataire: Germain Maureau
(86) Numéro de dépôt international: PCT/FR2018/051871
(87) Numéro de publication internationale: WO 2019/020914

(56) Documents cités:
- EP-A1- 0 551 571
- EP-A1- 1 661 461
- DE-A1-102012 216 206
- US-A1- 2003 053 368

## Description

La présente invention se rapporte au domaine de la boulangerie/pâtisserie industrielle, et concerne un organe de pétrissage pour dispositif de pétrissage d'une pâte et un dispositif de pétrissage de pâte comportant un tel organe de pétrissage.

Comme cela est connu en soi, la fabrication d'une pâte de boulangerie comporte plusieurs étapes successives. Les principales étapes de la fabrication d'une telle pâte avant cuisson sont les suivantes :
- le frasage : étape qui consiste à mélanger les ingrédients qui composent la pâte dans la cuve d'un dispositif de pétrissage tel qu'un pétrin ;
- le pétrissage : étape qui consiste à texturer la pâte en développant le réseau protéique de la pâte. Le développement du réseau protéique est obtenu en appliquant une force mécanique sur la pâte formée lors du frasage afin d'obtenir une homogénéisation des ingrédients qui composent la pâte ;
- la fermentation de la pâte.

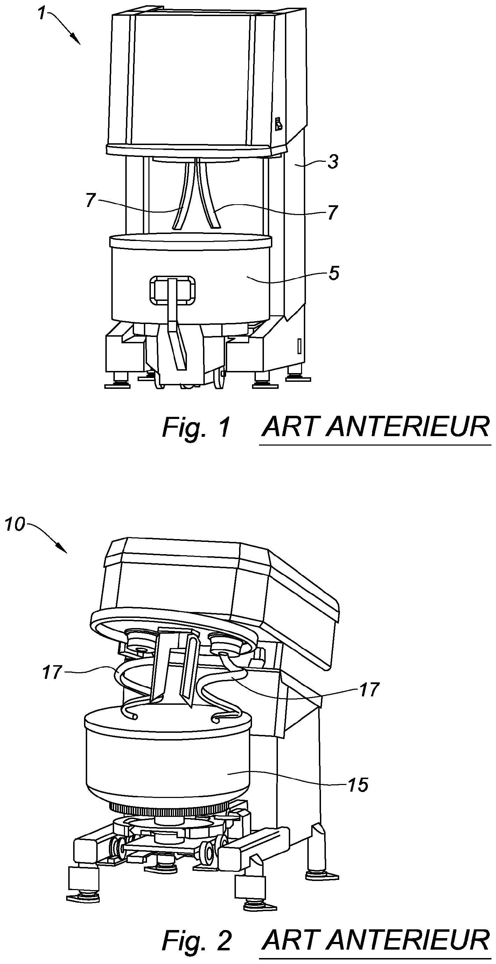

Un dispositif de pétrissage 1 connu de l'art antérieur et représenté à la figure 1 comporte un châssis 3 sur lequel est montée, fixe ou en rotation sur le châssis, une cuve 5, destinée à recevoir les ingrédients qui composent la pâte, un moteur, apte à entraîner en rotation deux organes de pétrissage 7 plongeant dans la cuve et conçus pour mélanger lesdits ingrédients.

Les organes de pétrissage de l'art antérieur peuvent être de forme rectiligne ou être légèrement courbés comme représenté à la figure 1.

La géométrie de ces organes permet d'obtenir une bonne incorporation de chaque ingrédient constituant le mélange.

En effet, le fait de prévoir des organes de pétrissage 7 rectilignes ou légèrement courbés permet de bien ramasser les ingrédients qui ont tendance à s'accumuler dans le fond de la cuve 5.

Toutefois, l'organe de pétrissage travaillant en cisaillement, la pâte a tendance à être coupée, ce qui entraîne une rupture des réseaux protéiques lors de la fermentation.

De plus, le travail en cisaillement de la pâte affecte l'élasticité de la pâte. La mauvaise élasticité de la pâte peut entraîner des problèmes de fermentation et donc dans le produit final.

Afin d'obtenir une meilleure texturation de la pâte, il est connu d'utiliser des organes de pétrissage en forme de spirale.

Un dispositif de pétrissage 10 de l'art antérieur équipé d'organes de pétrissage 17 en forme de spirale est représenté à la figure 2.

La forme hélicoïdale de ces organes améliore le comportement rhéologique de la pâte.

En revanche, lorsque le pétrissage est réalisé au moyen d'organes de pétrissage présentant une forme hélicoïdale, certains ingrédients sont plus difficiles à disperser en fond de cuve.

C'est notamment le cas lorsque du sucre est incorporé au mélange : le sucre a tendance à s'accumuler dans le fond de la cuve 15, et l'organe de pétrissage hélicoïdal en rotation dans la cuve répand le sucre sur le fond de la cuve.

D'autres outils de pétrissages connus sont décrits dans les documents US2003/053368, EP0551571, DE102012216206 et EP1661461.

La présente invention vise à pallier les inconvénients de l'art antérieur. Elle vise à cet effet à fournir un organe de pétrissage qui entraîne une bonne incorporation des ingrédients qui constituent la pâte et qui permettant une bonne texturation de la pâte.

A cet effet, la présente invention, définie par la revendication 1,concerne un organe de pétrissage pour dispositif de pétrissage d'une pâte, ledit organe de pétrissage comprenant :
- une galette de montage, apte à être mise en rotation par l'intermédiaire d'un moteur du dispositif de pétrissage ;
- un outil de pétrissage, destiné à plonger au moins partiellement dans une cuve de mélange et de pétrissage du dispositif de pétrissage et conçu pour mélanger des ingrédients qui constituent une pâte, ledit outil de pétrissage comprenant :
   - une portion supérieure, s'étendant depuis ladite galette de montage,
   - une portion médiane, dans le prolongement de ladite portion supérieure, et
   - une portion inférieure, dans le prolongement de ladite portion médiane, dont une extrémité consiste en un bord inférieur de l'outil de pétrissage,
ledit organe de pétrissage étant remarquable en ce que l'outil de pétrissage consiste en une hélice circulaire dont l'angle d'enroulement est non constant au moins entre lesdites portions supérieure, médiane et inférieure dudit outil de pétrissage, et en ce que l'angle d'enroulement de la portion inférieure dudit outil de pétrissage est inférieur à celui de la portion médiane dudit outil de pétrissage.

Ainsi, en prévoyant un organe de pétrissage dont l'outil de pétrissage consiste en une hélice circulaire, dont l'angle d'enroulement est non constant entre les portions supérieure, médiane et inférieure de l'outil de pétrissage, et dont l'angle d'enroulement de la portion inférieure de l'outil de pétrissage est inférieur à celui de la portion médiane dudit outil de pétrissage, on parvient à obtenir à la fois une bonne qualité de mélange des ingrédients qui composent la pâte et une bonne texturation de la pâte.

En effet, le fait de prévoir un angle d'enroulement de la portion inférieure de l'outil inférieur à celui de la portion médiane de l'outil permet à la portion inférieure de l'outil de ramasser convenablement les ingrédients qui composent la pâte et qui ont tendance à s'accumuler dans le fond de la cuve. On améliore ainsi la qualité de mélange de la pâte par rapport à celle obtenue dans l'art antérieur avec un outil sous forme de spirale.

De plus, le fait de disposer d'un angle d'enroulement de la portion médiane de l'outil supérieur à celui de la portion inférieure de l'outil permet d'obtenir une bonne texturation de la pâte car la forme hélicoïdale améliore le comportement rhéologique de la pâte. On améliore ainsi la qualité de texturation de la pâte par rapport à celle obtenue dans l'art antérieur avec un outil rectiligne ou faiblement courbé.

Selon l'invention, la valeur de l'angle d'enroulement formé par les portions supérieure et médiane de l'outil de pétrissage est comprise entre environ 85% et environ 95% de la valeur de l'angle d'enroulement total de l'outil de pétrissage, et la valeur de l'angle d'enroulement formé par la portion inférieure de l'outil de pétrissage est comprise entre environ 5% et environ 15% de la valeur de l'angle d'enroulement total de l'outil de pétrissage.

Selon l'invention, les portions supérieure et médiane de l'outil de pétrissage s'étendent sur une hauteur comprise entre environ 70% et environ 75% de la hauteur totale de l'outil de pétrissage, et la portion inférieure de l'outil de pétrissage s'étend sur une hauteur comprise entre environ 25% et environ 30% de la hauteur totale de l'outil de pétrissage, ladite hauteur étant mesurée entre un plan de référence contenant une paroi supérieure de la galette de montage et un plan parallèle audit plan de référence et décalé par rapport audit plan de référence en direction du bord inférieur de l'outil de pétrissage.

Selon des caractéristiques optionnelles de l'organe de pétrissage de l'invention :
- l'angle d'enroulement de l'outil de pétrissage décroît depuis la portion médiane dudit outil jusqu'à la portion inférieure dudit outil ;
- l'angle d'enroulement de la portion supérieure de l'outil de pétrissage et l'angle d'enroulement de la portion inférieure dudit outil sont constants, et l'angle d'enroulement de la portion médiane dudit outil est non constant ;
- l'angle d'enroulement de l'outil de pétrissage est décroissant sur la portion médiane dudit outil ;
- l'angle d'enroulement de la portion inférieure de l'outil de pétrissage est inférieur ou égal à la moitié de la plus petite valeur d'angle d'enroulement de la portion médiane dudit outil ;
- l'angle d'enroulement de l'outil de pétrissage est supérieur ou égal à 220° ;
- l'angle d'enroulement de la portion inférieure de l'outil de pétrissage est compris entre environ 15° et environ 25° ;
- l'angle d'enroulement total de la portion supérieure de l'outil de pétrissage et de la portion médiane dudit outil est compris entre environ 195° et environ 205° ;

La présente invention concerne également un dispositif de pétrissage d'une pâte comportant un châssis, ledit châssis supportant :
- une cuve de mélange et de pétrissage,
- un moteur, et
- au moins un organe de pétrissage selon l'invention, mis en rotation par l'intermédiaire dudit moteur et dont l'outil de pétrissage dudit organe de pétrissage plonge au moins partiellement dans ladite cuve de mélange et de pétrissage.

D'autres caractéristiques et avantages de l'invention apparaîtront à la lecture de la description détaillée qui suit pour la compréhension de laquelle on se reportera aux dessins annexés dans lesquels :
- la figure 1 représente un dispositif de pétrissage selon une première réalisation de l'art antérieur ;
- la figure 2 illustre un dispositif de pétrissage selon une deuxième réalisation de l'art antérieur ;
- la figure 3 représente un dispositif de pétrissage selon l'invention ;
- la figure 4 illustre l'organe de pétrissage de l'invention en vue isométrique ;
- la figure 5 est une vue de dessus de l'organe de pétrissage de la figure 4;
- la figure 6 est une vue de côté de l'organe de pétrissage de la figure 4.

Sur l'ensemble des figures, des références identiques ou analogues représentent des organes ou ensembles d'organes identiques ou analogues.

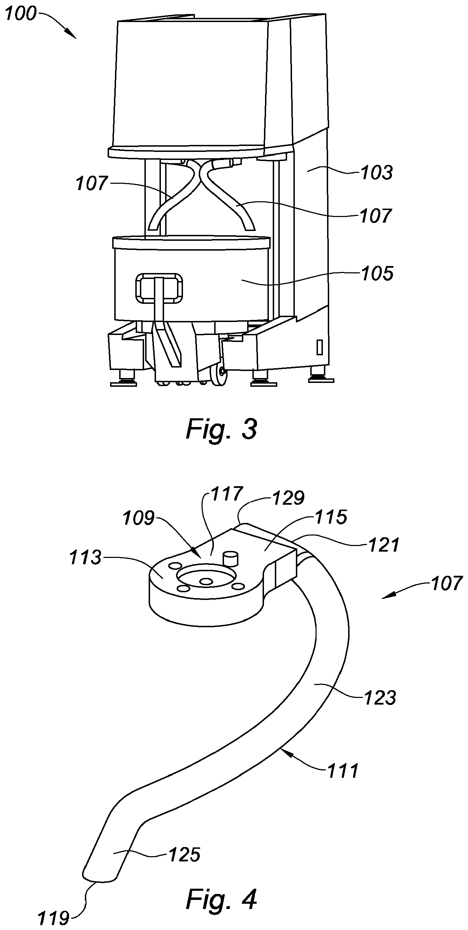

On se réfère à la figure 3 illustrant un dispositif de pétrissage 100 selon l'invention.

Le dispositif de pétrissage 100 d'une pâte comporte un châssis 103. Le châssis 103 supporte une cuve de mélange et de pétrissage 105 destinée à recevoir les ingrédients qui composent la pâte à mélanger et à pétrir.

De façon connue, la cuve 105 peut être fixe sur le châssis 103 ou peut être montée en rotation sur le châssis 103.

La cuve peut par exemple présenter une forme sensiblement cylindrique.

Le châssis 103 supporte en outre un moteur (non visible) apte à entraîner en rotation un ensemble d'organes de pétrissage 107 selon l'invention.

Les organes de pétrissage 107 plongent au moins partiellement dans la cuve de mélange et de pétrissage 105, ceci afin de permettre le mélange des ingrédients composant la pâte, et le pétrissage de la pâte.

Par exemple, deux organes de pétrissage 107 peuvent être montés sur le moteur du dispositif de pétrissage. Bien sûr, le dispositif de pétrissage peut comporter un unique organe de pétrissage 107, ou bien plus de deux organes de pétrissage.

Les deux organes de pétrissage 107 équipant le dispositif de pétrissage de l'invention sont identiques. L'organe de pétrissage 107 de l'invention va être décrit en détail en référence aux figures 4 à 6.

On se réfère à la figure 4, illustrant l'organe de pétrissage 107 de l'invention en vue isométrique.

L'organe de pétrissage comporte une galette de montage 109 et un outil de pétrissage 111.

La galette de montage 109 est positionnée en partie supérieure de l'organe de pétrissage 111 lorsque l'organe de pétrissage est monté sur le moteur du dispositif de pétrissage.

La galette de montage 109 est conçue pour assurer la fixation de l'organe de pétrissage 107 sur le moteur du dispositif de pétrissage 100.

La galette de montage 109 adopte par exemple une forme sensiblement plane. Elle comporte une portion circulaire 113 poursuivie par une extension 115 reliant la portion circulaire 113 à l'outil de pétrissage 111.

L'outil de pétrissage 111 constitue la portion de l'organe de pétrissage qui vient en contact avec les ingrédients composant la pâte à mélanger et à pétrir.

L'outil de pétrissage est obtenu dans un matériau conçu pour mélanger des ingrédients qui constituent la pâte, comme par exemple un acier inoxydable.

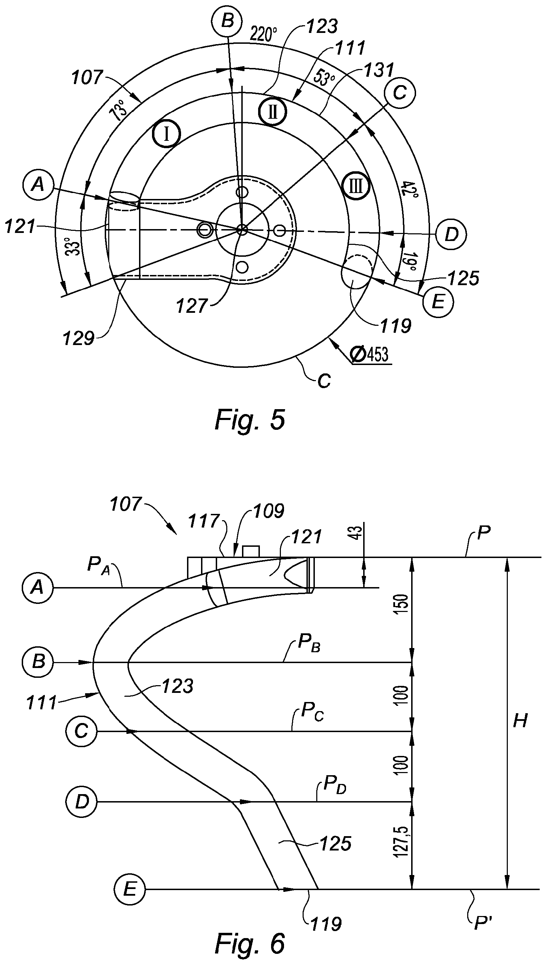

Afin de permettre à l'outil de pétrissage 111 de venir au contact de la pâte à ménager et à pétrir lorsque l'organe de pétrissage est monté sur le dispositif de pétrissage, l'outil de pétrissage 111 est relativement long. Sa hauteur H (représentée à la figure 6) est par exemple comprise entre environ 450 millimètres et environ 500 millimètres. De manière préférée, la hauteur de l'outil est de l'ordre de 477,50 millimètres.

La hauteur de l'outil de pétrissage 111 est mesurée entre un plan de référence P (représenté à la figure 6) contenant une paroi supérieure 117 de la galette de montage 109 et un plan P' (représenté à la figure 6) parallèle audit plan de référence et passant par un bord inférieur 119 de l'outil de pétrissage 111.

De manière préférée, la section transverse de l'outil de pétrissage 111 est constante sur toute la hauteur H de l'outil de pétrissage.

La forme de la section transverse de l'outil de pétrissage 111 est de manière préférée circulaire. Bien sûr, d'autres formes de section peuvent être retenues, comme par exemple une section de forme triangulaire, rectangulaire, carrée, trapézoïdale, d'ellipse.

Lorsque l'outil de pétrissage 111 présente une section circulaire, son diamètre est par exemple compris entre environ 25 millimètres et environ 75 millimètres. De manière préférée, son diamètre est de l'ordre de 50 millimètres.

L'outil de pétrissage 111 comprend une portion supérieure 121, s'étendant depuis la galette de montage 109. La portion supérieure 121 est poursuivie par une portion médiane 123 dans le prolongement de la portion supérieure 121.

La portion médiane 123 est elle-même poursuivie par une portion inférieure 125 dans le prolongement de la portion médiane 123.

L'extrémité de la portion inférieure 125 est constituée par le bord inférieur 119. Le terme « extrémité de la portion inférieure » doit s'entendre comme l'extrémité libre de la portion inférieure 125, c'est-à-dire l'extrémité de l'outil de pétrissage qui n'est pas directement située dans le prolongement de la portion médiane 123 de l'outil 111.

Selon l'invention, les portions supérieure 121, médiane 123 et inférieure 125 de l'outil de pétrissage 111 consistent en une hélice circulaire dont l'angle d'enroulement est non constant entre les portions supérieure, médiane et inférieure, c'est-à-dire que l'angle d'enroulement de la portion supérieure 121 de l'outil 111 est différent de l'angle d'enroulement de la portion médiane 123 de l'outil, et l'angle d'enroulement de la portion médiane 123 de l'outil est lui-même différent de l'angle d'enroulement de la portion inférieure 125 de l'outil 111.

Selon l'invention, l'angle d'enroulement de la portion inférieure 125 de l'outil de pétrissage 111 est inférieur à celui de la portion médiane 123 de l'outil.

Cela permet à la portion inférieure 125 de l'outil de ramasser convenablement les ingrédients qui composent la pâte et qui ont tendance à s'accumuler dans le fond de la cuve, tout en obtenant une bonne texturation de la pâte grâce à l'angle d'enroulement de l'outil supérieur au niveau de sa portion médiane 123 par rapport à l'angle d'enroulement prévu au niveau de sa portion inférieure 125.

On se réfère aux figures 5 et 6, représentant l'organe de pétrissage 107 respectivement en vue de dessus et en vue de côté.

En référence à la figure 5 représentant l'organe de pétrissage 107 en vue de dessus, l'angle d'enroulement de l'outil de pétrissage 111 est défini par l'angle formé par l'outil de pétrissage 111 autour d'un axe de rotation 127 de l'organe de pétrissage lorsque l'organe de pétrissage est monté sur le moteur du dispositif de pétrissage, entre un bord supérieur 129 en extrémité de la portion supérieure 121 de l'outil 111 et le bord inférieur 119 en extrémité inférieure de la portion inférieure 125 de l'outil.

L'outil de pétrissage s'inscrit entièrement dans un cylindre C imaginaire dont l'axe du cylindre correspond à l'axe de rotation 127, et le rayon dudit cylindre est défini par le segment de droite compris entre l'axe de rotation 127 de l'outil et un bord extérieur 131 de l'outil.

Selon une caractéristique de l'invention, l'angle d'enroulement de l'outil de pétrissage 111 est au moins égal à 220°. Il peut toutefois être envisagé de prévoir un angle d'enroulement de l'outil supérieur à 220°.

De manière préférée, lorsque l'angle d'enroulement de l'outil de pétrissage est égal à 220°, l'angle d'enroulement de la portion inférieure 125 de l'outil de pétrissage est compris entre environ 15° et environ 25°. Selon une réalisation de l'outil de pétrissage 111, l'angle d'enroulement de la portion inférieure 125 de l'outil de pétrissage est égal à environ 19°.

De même, l'angle d'enroulement total de la portion supérieure 121 de l'outil de pétrissage 111 et de la portion médiane 123 de l'outil est compris entre environ 195° et environ 205°. Selon une réalisation de l'outil de pétrissage 111, l'angle d'enroulement total de la portion supérieure 121 de l'outil de pétrissage 111 et de la portion médiane 123 de l'outil est égal à environ 201°.

En tout état de cause, afin d'obtenir de bonnes propriétés à la fois de mélange des ingrédients composant la pâte et de texturation de la pâte, la valeur de l'angle d'enroulement formé par la portion inférieure 125 de l'outil de pétrissage 111 est préférentiellement comprise entre environ 5% et environ 15% de la valeur de l'angle d'enroulement total de l'outil. Les portions supérieure 121 et médiane 123 de l'outil de pétrissage 111 définissent quant à elles une valeur angle d'enroulement comprise entre environ 85% et environ 95% de la valeur de l'angle d'enroulement total de l'outil de pétrissage.

Selon une caractéristique de l'invention, l'angle d'enroulement de la portion supérieure 121 et l'angle d'enroulement de la portion inférieure 125 de l'outil de pétrissage 111 sont constants tandis que l'angle d'enroulement de la portion médiane 123 de l'outil 111 est non constant.

En effet, comme représenté à la figure 5, la portion supérieure 121 de l'outil 111 présente par exemple un angle d'enroulement égal à 33° et la portion inférieure 125 de l'outil 111 présente par exemple un angle d'enroulement égale à 19°, tandis que la portion médiane 123 de l'outil 111 présente un angle d'enroulement égal à 73° sur une première section I, puis égal à 53° sur une deuxième section II, puis égal à 42° sur une troisième section III.

Selon une autre caractéristique de l'invention également visible à la figure 5, l'angle d'enroulement de l'outil de pétrissage 111 décroît depuis la portion médiane 123 de l'outil jusqu'à la portion inférieure 125 de l'outil.

En outre, l'angle d'enroulement de l'outil de pétrissage 111 est également décroissant sur la portion médiane 123 de l'outil, la section I de la portion médiane 123 présentant un angle égal à 73°, la section Il de la portion médiane 123 présentant un angle égal à 53° et la section III de la portion médiane 123 présentant un angle égal à 42°.

Quelles que soient les valeurs d'enroulement retenues et comme représenté à la figure 5, l'angle d'enroulement de la portion inférieure 125 de l'outil de pétrissage est inférieur ou égal à la moitié de la plus petite valeur d'angle d'enroulement de la portion médiane 123. Cela permet d'obtenir un outil relativement peu enroulé sur la portion inférieure de l'outil, ceci permettant à l'outil de bien ramasser les ingrédients qui ont tendance à s'accumuler dans le fond de la cuve du dispositif de pétrissage.

On se réfère à la figure 6 illustrant l'organe de pétrissage 107 de l'invention en vue de côté.

Comme discuté plus haut, on définit la hauteur H de l'outil de pétrissage 111 comme étant la distance mesurée entre le plan de référence P contenant la paroi supérieure 117 de la galette de montage 109 et un plan P' parallèle audit plan de référence et passant par le bord inférieur 119 de l'outil de pétrissage 111.

La hauteur H de l'outil de pétrissage est par exemple égale 477,50 millimètres.

Toutefois, quelle que soit la hauteur H de l'outil de pétrissage 111 retenue, les portions supérieure 121 et médiane 123 de l'outil de pétrissage 111 s'étendent sur une hauteur comprise entre environ 70% et environ 75% de la hauteur H totale de l'outil 111, et la portion inférieure 125 de l'outil 111 s'étend sur une hauteur comprise entre environ 25% et environ 30% de la hauteur H totale de l'outil 111.

On a représenté aux figures 5 et 6 l'organe de pétrissage subdivisé en 5 sections A à E. En référence aux figures 5 et 6, les angles d'enroulement de l'outil de pétrissage sont définis par les valeurs suivantes :
- Section A : 33° sur une hauteur de l'outil égale à 43 millimètres, ladite hauteur étant mesurée entre le plan de référence P contenant la paroi supérieure 117 de la galette de montage 109 et un plan P_{A} parallèle audit plan de référence et décalé de 43 millimètres par rapport audit plan de référence en direction du bord inférieur 119 de l'outil 111,
- Section B : 73° sur une hauteur de l'outil égale à 107 millimètres, ladite hauteur étant mesurée entre le plan P_{A} parallèle audit plan de référence P et décalé de 43 millimètres par rapport audit plan de référence P en direction du bord inférieur 119 de l'outil 111 et un plan P_{B} parallèle audit plan de référence P et décalé de 150 millimètres par rapport audit plan de référence P en direction du bord inférieur 119 de l'outil 111,
- Section C : 53° sur une hauteur de l'outil égale à 100 millimètres, ladite hauteur étant mesurée entre le plan P_{B} parallèle audit plan de référence et décalé de 150 millimètres par rapport audit plan de référence P en direction du bord inférieur 119 de l'outil de pétrissage 111 et un plan Pc parallèle audit plan de référence P et décalé de 250 millimètres par rapport audit plan de référence P en direction du bord inférieur 119 de l'outil 111,
- Section D : 42° sur une hauteur de l'outil égale à 100 millimètres, ladite hauteur étant mesurée entre le plan Pc parallèle audit plan de référence P et décalé de 250 millimètres par rapport audit plan de référence P en direction du bord inférieur 119 de l'outil de pétrissage 111 et un plan P_{D} parallèle audit plan de référence P et décalé de 350 millimètres par rapport audit plan de référence P en direction du bord inférieur 119 de l'outil 111,
- Section E : 19° sur une hauteur de l'outil égale à 127,50 millimètres, ladite hauteur étant mesurée entre le plan P_{D} parallèle audit plan de référence P et décalé de 350 millimètres par rapport audit plan de référence P en direction du bord inférieur 119 de l'outil de pétrissage 111 et le plan P' parallèle audit plan de référence et décalé de 477,50 millimètres par rapport audit plan de référence P, passant par le bord inférieur 119 de l'outil de pétrissage 111.

L'organe de pétrissage de la présente invention permet d'obtenir un bon compromis entre qualité du mélange des ingrédients qui composent la pâte et texturation de la pâte.

Ce compromis est obtenu grâce à la géométrie particulière de l'outil de pétrissage de l'invention, qui prévoit un angle d'enroulement de la portion inférieure de l'outil inférieur à celui de la portion médiane de l'outil de pétrissage.

## Revendications

1. Organe de pétrissage (107) pour dispositif de pétrissage (100) d'une pâte, ledit organe de pétrissage comprenant :
- une galette de montage (109), apte à être mise en rotation par l'intermédiaire d'un moteur du dispositif de pétrissage ;
- un outil de pétrissage (111), destiné à plonger au moins partiellement dans une cuve de mélange et de pétrissage (105) du dispositif de pétrissage et conçu pour mélanger des ingrédients qui constituent une pâte, ledit outil de pétrissage (111) comprenant :
• une portion supérieure (121), s'étendant depuis ladite galette de montage (109),
• une portion médiane (123), dans le prolongement de ladite portion supérieure (121), et
• une portion inférieure (125), dans le prolongement de ladite portion médiane (123), dont une extrémité consiste en un bord inférieur (119) de l'outil de pétrissage (111),
l'outil de pétrissage (111) consistant en une hélice circulaire dont l'angle d'enroulement est non constant au moins entre lesdites portions supérieure (121), médiane (123) et inférieure (125) dudit outil de pétrissage (111), l'angle d'enroulement de la portion inférieure (125) dudit outil de pétrissage (111) est inférieur à celui de la portion médiane (123) dudit outil de pétrissage, l'angle d'enroulement étant défini par l'angle formé par l'outil de pétrissage (111) autour d'un axe de rotation (127) de l'organe de pétrissage, entre un bord supérieur (129) en extrémité de la portion supérieure (121) de l'outil de pétrissage (111) et le bord inférieur (119),
l'organe de pétrissage étant **caractérisé en ce que** :
- la valeur de l'angle d'enroulement formé par les portions supérieure (121) et médiane (123) de l'outil de pétrissage (111) est comprise entre 85% et 95% de la valeur de l'angle d'enroulement total de l'outil de pétrissage, et **en ce que** la valeur de l'angle d'enroulement formé par la portion inférieure (125) de l'outil de pétrissage est comprise entre 5% et 15% de la valeur de l'angle d'enroulement total de l'outil de pétrissage, et **en ce que**,
- les portions supérieure (121) et médiane (123) de l'outil de pétrissage (111) s'étendent sur une hauteur comprise entre 70% et 75% de la hauteur (H) totale de l'outil de pétrissage, et **en ce que** la portion inférieure (125) de l'outil de pétrissage (111) s'étend sur une hauteur comprise entre 25% et 30% de la hauteur (H) totale de l'outil de pétrissage, ladite hauteur (H) totale de l'outil de pétrissage étant mesurée entre un plan de référence (P) contenant une paroi supérieure (117) de la galette de montage (109) et un plan (P') parallèle audit plan de référence (P) et passant par le bord inférieur (119) de l'outil de pétrissage.

2. Organe de pétrissage (107) selon la revendication 1, **caractérisé en ce que** l'angle d'enroulement de l'outil de pétrissage (111) décroît depuis la portion médiane (123) dudit outil jusqu'à la portion inférieure (125) dudit outil.

3. Organe de pétrissage (107) selon l'une des revendications 1 ou 2, **caractérisé en ce que** l'angle d'enroulement de la portion supérieure (121) de l'outil de pétrissage (111) et l'angle d'enroulement de la portion inférieure (125) dudit outil sont constants, et **en ce que** l'angle d'enroulement de la portion médiane (123) dudit outil est non constant.

4. Organe de pétrissage (107) selon l'une quelconque des revendications 1 à 3, **caractérisé en ce que** l'angle d'enroulement de l'outil de pétrissage (111) est décroissant sur la portion médiane (123) dudit outil.

5. Organe de pétrissage (107) selon la revendication 4, **caractérisé en ce que** l'angle d'enroulement de la portion inférieure (125) de l'outil de pétrissage est inférieur ou égal à la moitié de la plus petite valeur d'angle d'enroulement de la portion médiane (123) dudit outil.

6. Organe de pétrissage (107) selon l'une quelconque des revendications 1 à 5, **caractérisé en ce que** l'angle d'enroulement de l'outil de pétrissage (111) est supérieur ou égal à 220°.

7. Organe de pétrissage (107) selon l'une quelconque des revendications 1 à 6, **caractérisé en ce que** l'angle d'enroulement de la portion inférieure (125) de l'outil de pétrissage (111) est compris entre 15° et 25°.

8. Organe de pétrissage (107) selon l'une quelconque des revendications 1 à 7, **caractérisé en ce que** l'angle d'enroulement total de la portion supérieure (121) de l'outil de pétrissage (111) et de la portion médiane (123) dudit outil est compris entre 195° et 205°.

9. Dispositif de pétrissage (100) d'une pâte comportant un châssis (103), ledit châssis supportant :
- une cuve de mélange et de pétrissage (105),
- un moteur, et
- au moins un organe de pétrissage (107) selon l'une quelconque des revendications 1 à 8, mis en rotation par l'intermédiaire dudit moteur et dont l'outil de pétrissage (111) dudit organe de pétrissage (107) plonge au moins partiellement dans ladite cuve de mélange et de pétrissage (105).

## Patentansprüche

1. Knetelement (107) für eine Knetvorrichtung (100) eines Teigs, wobei das Knetelement Folgendes umfasst:
- eine Befestigungsscheibe (109), die dazu in der Lage ist, durch einen Motor der Knetvorrichtung in Rotation versetzt zu werden;
- ein Knetwerkzeug (111), das dazu bestimmt ist, zumindest teilweise in einen Misch- und Knetbehälter (105) der Knetvorrichtung eingetaucht zu werden, und das zum Mischen von Zutaten ausgebildet ist, die einen Teig bilden, wobei das Knetwerkzeug (111) Folgendes umfasst:
• einen oberen Abschnitt (121), der sich von der Befestigungsscheibe (109) erstreckt,
• einen mittleren Abschnitt (123) in Verlängerung des oberen Abschnitts (121), und
• einen unteren Abschnitt (125) in Verlängerung des mittleren Abschnitts (123), dessen eines Ende aus einem unteren Rand (119) des Knetwerkzeugs (111) besteht,
wobei das Knetwerkzeug (111) aus einer runden Spirale besteht, deren Wicklungswinkel zumindest zwischen dem oberen (121), dem mittleren (123) und dem unteren (125) Abschnitt des Knetwerkzeugs (111) nicht konstant ist, wobei der Wicklungswinkel des unteren Abschnitts (125) des Knetwerkzeugs (111) kleiner als der mittlere Abschnitt (123) des Knetwerkzeugs ist, wobei der Wicklungswinkel durch den Winkel definiert ist, der durch das Knetwerkzeug (111) um eine Rotationsachse (127) des Knetelements zwischen einem oberen Rand (129) am Ende des oberen Abschnitts (121) des Knetwerkzeugs (111) und dem unteren Rand (119) gebildet wird,
wobei das Knetelement **dadurch gekennzeichnet ist, dass**:
- der Wert des Wicklungswinkels, der durch den oberen (121) und den mittleren (123) Abschnitt des Knetwerkzeugs (111) gebildet wird, zwischen 85 % und 95 % des Werts des gesamten Wicklungswinkels des Knetwerkzeugs beträgt, und dadurch, dass der Wert des Wicklungswinkels, der durch den unteren Abschnitt (125) des Knetwerkzeugs gebildet wird, zwischen 5 % und 15 % des Werts des gesamten Wicklungswinkels des Knetwerkzeugs beträgt, und dadurch, dass
- der obere (121) und der mittlere (123) Abschnitt des Knetwerkzeugs (111) sich über eine Höhe zwischen 70 % und 75 % der Gesamthöhe (H) des Knetwerkzeugs erstrecken, und dadurch, dass der untere Abschnitt (125) des Knetwerkzeugs (111) sich über eine Höhe zwischen 25 % und 30 % der Gesamthöhe (H) des Knetwerkzeugs erstreckt, wobei die Gesamthöhe (H) des Knetwerkzeugs zwischen einer Referenzebene (P), die eine obere Wand (117) der Befestigungsscheibe (109) umfasst, und einer Ebene (P') gemessen wird, die parallel zu der Referenzebene (P) ist und durch den unteren Rand (119) des Knetwerkzeugs verläuft.

2. Knetelement (107) nach Anspruch 1, **dadurch gekennzeichnet, dass** der Wicklungswinkel des Knetwerkzeugs (111) vom mittleren Abschnitt (123) des Werkzeugs zum unteren Abschnitt (125) des Werkzeugs hin abnimmt.

3. Knetelement (107) nach einem der Ansprüche 1 oder 2, **dadurch gekennzeichnet, dass** der Wicklungswinkel des oberen Abschnitts (121) des Knetwerkzeugs (111) und der Wicklungswinkel des unteren Abschnitts (125) des Werkzeugs konstant sind, und dadurch, dass der Wicklungswinkel des mittleren Abschnitts (123) des Werkzeugs nicht konstant ist.

4. Knetelement (107) nach einem der Ansprüche 1 bis 3, **dadurch gekennzeichnet, dass** der Wicklungswinkel des Knetwerkzeugs (111) auf dem mittleren Abschnitt (123) des Werkzeugs abnimmt.

5. Knetelement (107) nach Anspruch 4, **dadurch gekennzeichnet, dass** der Wicklungswinkel des unteren Abschnitts (125) des Knetwerkzeugs kleiner oder gleich der Hälfte des kleinsten Werts des Wicklungswinkels des mittleren Abschnitts (123) des Werkzeugs ist.

6. Knetelement (107) nach einem der Ansprüche 1 bis 5, **dadurch gekennzeichnet, dass** der Wicklungswinkel des Knetwerkzeugs (111) größer oder gleich 220° ist.

7. Knetelement (107) nach einem der Ansprüche 1 bis 6, **dadurch gekennzeichnet, dass** der Wicklungswinkel des unteren Abschnitts (125) des Knetwerkzeugs (111) zwischen 15° und 25° beträgt.

8. Knetelement (107) nach einem der Ansprüche 1 bis 7, **dadurch gekennzeichnet, dass** der gesamte Wicklungswinkel des oberen Abschnitts (121) des Knetwerkzeugs (111) und des mittleren Abschnitts (123) des Werkzeugs zwischen 195° und 205° beträgt.

9. Knetvorrichtung (100) für einen Teig, umfassend einen Rahmen (103), wobei der Rahmen Folgendes trägt:
- einen Misch- und Knetbehälter (105),
- einen Motor und
- mindestens ein Knetelement (107) nach einem der Ansprüche 1 bis 8, das durch den Motor in Rotation versetzt wird und dessen Knetwerkzeug (111) des Knetelements (107) zumindest teilweise in den Misch- und Knetbehälter (105) eingetaucht wird.

## Claims

1. A kneading member (107) for a kneading device (100) of a dough, said kneading member comprising:
- a mounting roller (109), adapted to be rotated via a motor of the kneading device;
- a kneading tool (111), intended to be at least partially immersed in a mixing and kneading vessel (105) of the kneading device and designed to mix ingredients that constitute a dough, said kneading tool (111) comprising:
• an upper portion (121), extending from said mounting roller (109),
• a middle portion (123), in the continuation of said upper portion (121), and
• a lower portion (125), in the continuation of said middle portion (123), one end of which consists of a lower edge (119) of the kneading tool (111),
the kneading tool (111) consists of a circular helix blade which winding angle is not constant at least between said upper (121), middle (123) and lower (125) portions of said kneading tool (111), the winding angle of the lower portion (125) of said kneading tool (111) is smaller than that of the middle portion (123) of said kneading tool, the winding angle being defined by the angle formed by the kneading tool (111) about an axis of rotation (127) of the kneading member, between an upper edge (129) at the end of the upper portion (121) of the kneading tool (111) and the lower edge (119)
the kneading member being **characterized in that**:
- the value of the winding angle formed by the upper (121) and middle (123) portions of the kneading tool (111) is comprised between 85% and 95% of the value of the total winding angle of the kneading tool, and **in that** the value of the winding angle formed by the lower portion (125) of the kneading tool is comprised between 5% and 15% of the value of the total winding angle of the kneading tool and **in that**,
- the upper (121) and middle (123) portions of the kneading tool (111) extend over a height comprised between 70% and 75% of the total height (H) of the kneading tool, and **in that** the lower portion (125) of the kneading tool (111) extends over a height comprised between 25% and about 30% of the total height (H) of the kneading tool, said total height (H) of the kneading tool being measured between a reference plane (P) containing an upper wall (117) of the mounting roller (109) and a plane (P') parallel to said reference plane (P) and passing through the lower edge (119) of the kneading tool.

2. The kneading member (107) according to claim 1, **characterized in that** the winding angle of the kneading tool (111) decreases from the middle portion (123) of said tool down to the lower portion (125) of said tool.

3. The kneading member (107) according to any of claims 1 to 2, **characterized in that** the winding angle of the upper portion (121) of the kneading tool (111) and the winding angle of the lower portion (125) of said tool are constant, and **in that** the winding angle of the middle portion (123) of said tool is not constant.

4. The kneading member (107) according to any one of claims 1 to 3, **characterized in that** the winding angle of the kneading tool (111) is decreasing over the middle portion (123) of said tool.

5. The kneading member (107) according to claim 4, **characterized in that** the winding angle of the lower portion (125) of the kneading tool is smaller than or equal to half the smallest winding angle value of the middle portion (123) of said tool.

6. The kneading member (107) according to any one of claims 1 to 5, **characterized in that** the winding angle of the kneading tool (111) is larger than or equal to 220°.

7. The kneading member (107) according to any one of claims 1 to 6, **characterized in that** the winding angle of the lower portion (125) of the kneading tool (111) is comprised between 15° and 25°.

8. The kneading member (107) according to any one of claims 1 to 7, **characterized in that** the total winding angle of the upper portion (121) of the kneading tool (111) and the middle portion (123) of said tool is comprised between 195° and 205°.

9. A device (100) for kneading a dough including a frame (103), said frame supporting:
- a mixing and kneading vessel (105),
- a motor, and
- at least one kneading member (107) according to any one of claims 1 to 8, rotated via said motor and which kneading tool (111) of said kneading member (107) is at least partially immersed in said mixing and kneading vessel (105).
